# EUROPÄISCHE PATENTSCHRIFT

(11) **EP 2 290 263 B1**
(45) Veröffentlichungstag und Bekanntmachung des Hinweises auf die Patenterteilung: **12.09.2012**
(21) Anmeldenummer: 10169469.3
(22) Anmeldetag: 14.07.2010
(51) Int. Cl.: F16H 61/28, F15B 11/12, F16H 61/30

(54) **Stellmotor**
Actuator
Servomoteur

(30) Priorität: 31.08.2009 DE 102009029038
(43) Veröffentlichungstag der Anmeldung: 02.03.2011
(73) Patentinhaber: ZF Friedrichshafen AG, 88038 Friedrichshafen (DE)
(72) Erfinder: Lanz, Hermann, 88699, Frickingen (DE)

(56) Entgegenhaltungen:
- EP-A1- 0 143 238
- EP-A1- 0 344 714
- EP-A2- 1 270 954
- WO-A1-2004/085886
- WO-A2-03/081091
- DE-A1- 2 341 199
- DE-A1- 3 107 908
- DE-A1- 3 329 801
- DE-A1- 10 334 628
- DE-A1- 19 543 646
- DE-A1- 19 939 204
- DE-A1-102004 006 625
- DE-B- 1 155 348
- DE-B- 1 576 175
- GB-A- 1 287 259

## Beschreibung

Die Erfindung betrifft einen Stellmotor zur Durchführung eines Synchronisierten Schaltverganges.

Es ist bekannt, Fahrzeuggetriebe mit größeren Gangzahlen als Gruppengetriebe, z. B. als Drei- oder Zwei-Gruppengetriebe auszubilden. Dabei sind einem Hauptgetriebe eine Vorschalt-Splitgruppe und/oder eine Nachschalt-Rangegruppe zugeordnet. Die Splitgruppe dient dem Verdichten der Gangfolge und die Bereichsoder Rangegruppe dem Erweitern der Gangfolge. Die Zuschaltung der Vorschaltoder Nachschaltgruppe kann vom Fahrer ausgelöst oder automatisch, d. h. unter Verwendung von elektro-pneumatischen, elektro-hydraulischen oder elektromechanischen Stellgliedem bzw. Stellmotoren erfolgen. Bei Nutzfahrzeugen werden vorwiegend pneumatische Stellglieder verwendet.

Durch die DE 196 43 646 A1. der Anmelderin wurde eine pneumatische Schalteinrichtung für eine Gruppenschaltung eines mechanischen Schaltgetriebes in einem Kraftfahrzeug bekannt Die Schafteinrichtung umfasst einen pneumatischen Zylinder, in welchem ein Kolben mit einer Kolbenstange gleitend angeordnet ist, wobei die Kolbenstange mit einem Schaltmechanismus verbunden ist. Ein Problem der bekannten pneumatischen Stellzylinder, auch Stellmotor genannt, besteht in dem harten Aufprall des Kolbens und der Schiebemuffe der Synchronisierung bei Errei-chen der Endlagen, was zu unerwünschten Aufschlaggeräuschen und zu Materialverschleiß führt. Man hat daher bereits verschiedene Vorschläge zur Endlagendämpfung des pneumatischen Kolbens gemacht. Bei der bekannten Schalteinrichtung ist im Schaltkolben ein längsbeweglicher Schieber angeordnet, der vor Erreichen der Endlage einen Durchflusskanal im Kolben öffnet, sodass ein Druckausgleich auf beiden Kolbenseiten erfolgt. Damit wird ein Dämpfungseffekt erreicht.

Durch die DE 1 155 348 C wurde eine pneumatische Betätigungsvorrichtung zum Umschaltet eines Stufenwechselgetriebes für Kraftfahrzeuge bekannt. Dabei sind in einem Zylindergehäuse ein Hauptkolben mit einer Kolbenstange sowie ein Hilfskolben angeordnet, welcher auf der Kolbenstange gleitend angeordnet ist und in dem Zylindergehäuse einen Teilhub ausführt. Die Schaltbewegung wird mittels des Hilfskolbens, welcher eine Drosselbohrung aufweist, in eine schnelle und eine langsame Bewegung aufgeteilt. Der Hilfskolben trifft nach Durchlaufen des Teilhubes auf einen Anschlag, danach strömt die Luft gedrosselt in den Raum zwischen Hilfskolben und Hauptkolben, sodass ein zweistufiger Schaftablauf erzeugt wird. Dabei wird in der ersten Stufe eine Umschaltung von einer Schaltstellung in die Leerlaufstellung und in der zweiten Stufe ein Synchronisationsvorgang mit einer größeren Kraft durchgeführt. Die Endlagendämpfung des Hauptkolbens erfolgt über stirnseitig am Hauptkolben angeordnete Dämpfungsauflagen.

Durch die WO 90/03523 A1 der Anmelderin wurde eine weitere pneumatische Schalteinrichtung mit einer Endlagendämpfung bekannt. In einem Pneumatikzylinder ist ein mit einer Kolbenstange verbundener Kolben angeordnet, welcher über eine Schaltstange und eine Schaltschwinge eine Schiebemuffe eines Gruppengetriebes betätigt. Zur Endlagendämpfung des Kolbens sind an den Zylinderböden ringförmige Dämpfungselemente angeordnet, welche in stirnseitig am Kolben angeordnete Ringnuten eingreifen und durch Druckaufbau den Anschlag des Kolbens in seiner Endstellung dämpfen.

Aus der GB 1 287 259 A , welche den neichst engenden stand der Technik darstellt, ist eine Vorrichtung zur Schaltung von Getriebegliedem mit Hilfe eines Druckmediums bekannt. Dabei wurde zur genauen Einstellung einer Mittellage ein Hauptkolbens und ein innerhalb des Hauptkolbens liegender Hilfskolben verwendet, die unterschiedliche Größen der Wirkflächen besitzen. Die Kolben sind relativ zueinander bewegbar. Anschlagelemente begrenzen die Relativbewegung der Kolben. Unterschiedlichen Stellkräften bei einem synchronisierten Schaltvorgang sind nicht vorgesehen.

Es ist Aufgabe der vorliegenden Erfindung, einen Stellmotor der eingangs genannten Art dahingehend zu verbessern, dass ein synchronisierter Schaltvorgang, der mittels eines Stellmotors erfolgt, möglichst geräusch- und verschleißfrei durchgeführt wird.

Die Aufgabe der Erfindung wird durch den unabhängigen Anspruch 1 gelöst. Vorteilhafte Ausgestaltungen ergeben sich aus den Unteransprüchen.

Erfindungsgemäß ist bei dem Schaltvorgang vorgesehen, dass während der ersten Phase eine relativ hohe Schaltkraft wirkt, während in der sich anschließenden zweiten Phase eine relativ niedrige Schaltkraft ausgeübt wird. Damit wird der Vorteil erreicht, dass die vom Stellmotor ausgeübte Schaltkraft an den Synchronisiervorgang angepasst ist und Anschlaggeräusche in den Endstellungen des Stellmotors sowie ein damit verbundener Materialverschleiß vermieden, zumindest wesentlich reduziert werden. Der Schaltvorgang erfolgt im Wesentlichen in zwei Phasen, wobei die erste Phase das Synchronisieren und Sperren umfasst, welches bekanntlich eine höhere Schaltkraft erfordert. In der zweiten. Phase, d. h. wenn die Synchronisierung abgeschlossen und die Sperrung durch die Sperrverzahnung des Synchronringes aufgehoben ist, erfolgt das Durchschalten, d. h. die Schaltmuffe wird mit ihrer Schaltverzahnung über die Verzahnung des Kupplungskörpers geschoben und stellt somit den Formschluss her-dieses Überschieben, welches den gesamten Schaltvorgang abschließt, erfordert eine geringere Schaltkraft. Dem trägt der erfindungsgemäße Stellmotor Rechnung, wobei gleichzeitig der Vorteil erzielt wird, dass aufgrund der geringeren Schaltkraft in der zweiten Phase ein weicherer Anschlag in den Endlagen erfolgt, wobei zusätzlich eine Dämpfung durch Dämpfungselemente vorteilhaft ist. Der Schaltkomfort wird somit deutlich verbessert.

Erfindungsgemäß ist bei einem Stellmotor ein geteilter Kolben vorgesehen, welcher einen ringförmigen äußeren Kolben sowie einen inneren Kolben aufweist, welcher mit der Kolbenstange verbunden ist. Der innere Kolben ist gleitend im äußeren Kolben angeordnet und in seiner axialen Verschlebbarkeit durch Anschläge begrenzt. Da der äußere Kolben einen größeren Außendurchmesser und eine größere wirksame Kolbenfläche als der innere Kolben aufweist, wird durch den äußeren Kolben eine größere Stellkraft über die Kolbenstange übertragen.

Für den ringförmigen äußeren Kolben, im Folgenden auch Ringkolben genannt, sind an den Stirnseiten des Zylinders Anschlagftächen, vorzugsveise ringförmige, vorgesehen, die den Hub des Ringkolbens begrenzen. Wenn der Ringkolben an einer der beiden Anschlagflächen anschlägt, d. h. seine Endstellung erreicht hat, beginnt die Bewegung des inneren Kolbens, wobei eine geringere Stellkraft aufgrund der geringeren Kolbenfläche ausgeübt wird. Der erfindungsgemäße Stellmotor bietet somit den Vorteil, dass zunächst über einen bestimmten ersten Weg (Kolbenhub) eine relativ hohe erste Stellkraft ausgeübt wird, während anschließend über einen zweiten Weg (Kolbenhub) eine geringere Stellkraft erzeugt wird.

Nach einer bevorzugten Ausführungsform ist der Stellmotor als Pneumatikzylinder ausgebildet, d. h. als Druckmedium für die beidseitige Beaufschlagung der Kolbenflächen wird Druckluft verwendet, die insbesondere in Nutzfahrzeugen zur Verfügung steht.

Bei einer Schalteinrichtung zur synchronisierten Schaltung von Gruppengetrieben ist ein Stellmotor der vorgenannten Art und mit den vorgenannten Merkmalen vorgesehen. Damit wird der Vorteil erreicht, dass der Verlauf der Schaltkraft an der Schaltmuffe dem Synchronisier und Schaltvorgang angepasst ist. Dadurch wird der Schaltkomfort verbessert, insbesondere werden wegen der geringeren Schaltkraft in der zweiten Phase des Schaltvorganges weniger Geräusche und ein geringerer Verschleiß verursacht. Bekanntlich treten beim synchronisierten Schalten an der Schaltmuffe unterschiedliche Kräfte auf, d. h, in der Phase des Synchronisierens und Sperrens tritt an der Schiebemuffe eine größere Schaltkraft auf als in der Phase des Überschiebens der Schaltmuffe über den Kupplungskörper, wenn der Formschluss hergestellt wird. An diesen Schaltkraftverlauf ist die erfindungsgemäße Ausbildung des Stellmotors angepasst.

Die Synchronisiereinrichtung kann als Einkonus-Synchronisierung ausgebildet sein. Der erfindungsgemäße Stellmotor ist jedoch auch für andere Bauarten von Synchronisiereinrichtungen verwendbar, also beispielsweise Doppelkonus- oder Sperrbolzen-Synchronisierungen.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: eine Schalteinrichtung mit Synchronisierung und einem erfindungsgemäßen Stellmotor in einer ers- ten Position,
- Fig. 2: die Schalteinrichtung gemäß Fig. 1 mit dem erfindungsgemäßen Stellmotor nach Fig 1 in einer zweiten Position,
- Fig. 3: die Schalteinrichtung mit erfindungsgemäßen Stellmotor nach Fig 1 in einer dritten Position,
- Fig. 4: die Schalteinrichtung mit erfindungsgemäßen Stellmotor nach Fig 1 in einer vierten Position und
- Fig. 5: ein Diagramm mit einem Schaltkraftverlauf, welcher die Erfindung charakterisiert.

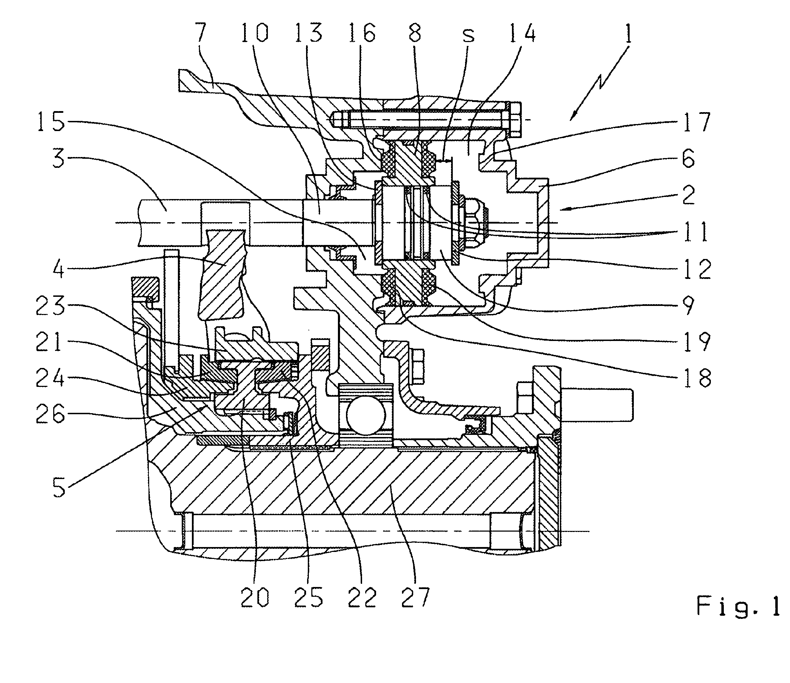

Fig. 1 zeigt eine teilweise dargestellte Schalteinrichtung 1 eines Gruppengetriebes, welches insbesondere für Nutzfahrzeuge verwendbar ist. Die Schalteinrichtung 1 umfasst einen als Pneumatikzylinder ausgebildeten, erfindungsgemäßen Stellmotor 2, eine Schaltstange 3, eine Schaltschwinge 4 sowie eine Synchronisiereinrichtung 5. Über die Schalteinrichtung 1 des dargestellten Ausführungsbeispieles wird ein nur teilweise dargestelltes, vorzugsweise als Planetengetriebe ausgebildetes Nachschaltgetriebe mittels des Stellmotors 2 geschaltet, wodurch eine schnelle und eine langsame Übersetzung erreicht wird. Der Stellmotor 2 weist einen Druckzylinder 6 auf, welcher an einem Getriebegehäuse 7 befestigt und abgedichtet ist. In dem Druckzylinder 6, im Folgenden auch kurz Zylinder 6 genannt, ist ein ringförmiger äußerer Kolben 8, im Folgenden auch Ringkolben 8 genannt, gleitend angeordnet. Innerhalb des Ringkolbens 8 ist ein innerer Kolben 9 gleitend angeordnet, welcher mit einer Kolbenstange 10 fest verbunden ist, welche gleichzeitig die Schaltstange 3 bildet. Der innere Kolben 9 bildet mit dem Ringkolben 8 einen Gleitsitz (ohne Bezugzahl), welcher durch Dichtelemente, vorzugsweise O-Ringe 11 oder Kolbendichtungen abgedichtet ist. Der innere Kolben 9 kann relativ zum Ringkolben 8 einen zusätzlichen Hub s ausführen; die Hubbewegung des inneren Kolbens 9 ist durch axiale Anschlagelemente in Form von Anschlagscheiben 12, 13 oder kreisförmigen Anschlägen begrenzt. Der Zylinder 6 bildet mit dem Getriebegehäuse 7 einen geschlossenen Druckraum, welcher durch die Kolben 8, 9 in die variablen Volumina oder Räume 14, 15 unterteilt wird. Die Räume 14, 15 werden - je nach Bewegungsrichtung der Kolbenstange 10 - abwechselnd mit Druckluft beaufschlagt oder entlüftet. Entsprechende Druckluftanschlüsse sind wegen einer vereinfachten Darstellung nicht eingezeichnet. Zur Hubbegrenzung des Ringkolbens 8 weist der Stellmotor 2 sich gegenüberliegende Anschlagflächen 16, 17 auf. In der Darstellung befindet sich der Ringkolben 8 in seiner (linken) Endlage. Zur Dämpfung des Anschlagens weist der Ringkolben 8 stirnseitig angeordnete Dämpfungsauflagen 18, 19 auf, welche das Anschlaggeräusch vermindern und den Aufprall dämpfen.

Die Synchronisiereinrichtung 5 ist vom Aufbau und von der Funktion an sich bekannt (vgl. H. Naunheimer, B. Bertsche u. G. Lechner, Fahrzeuggetriebe, 2. Auflage, 2007, Seite 318 - 320): Es handelt sich um eine Einkonus-Synchronisierung, welche folgende Teile umfasst: einen Synchronkörper 20, einen ersten Synchronring 21, einen zweiten Synchronring 22, eine Schaltmuffe 23 sowie einen ersten Kupplungskörper 24 und einen zweiten Kupplungskörper 25. Die Schaltmuffe 23 wird auf an sich bekannte Weise mittel der Schaltschwinge 4 verschoben, wobei die Verschieberichtung der Schaltmuffe 23 entgegengesetzt zur Verschieberichtung der Schaltstange 3 bzw. der Kolbenstange 10 ist. Der Synchronkörper 20 ist drehfest mit einer Hohlwelle 26 verbunden; der zweite Kupplungskörper 25 ist drehfest auf einer Welle 27 angeordnet, welche im Getriebegehäuse 7 gelagert ist.

Im Folgenden wird die Funktion des erfindungsgemäßen Stellmotors 2 in Verbindung mit der Synchronisiereinrichtung 5 beschrieben:
Der Ringkolben 8 befindet sich in Fig. 1 in seiner linken Endlage, d. h. er liegt an der Anschlagfläche 16 an. Der Raum 14 ist mit Luft von etwa 10 bar beaufschlagt, während der Raum 15 entlüftet ist, d. h. mit der Atmosphäre in Verbindung steht. Der innere Kolben 9 steht um den Hub s in der Zeichnung nach rechts gegenüber dem Ringkolben 8 vor. Die Schaltmuffe 23 bewegt sich aufgrund der Schwenkbewegung der Schaltschwinge 4 jeweils in entgegengesetzter Richtung wie die Schaltstange 3 bzw. die Kolbenstange 10. In der in Fig. 1 dargestellten Position befindet sich die Schaltmuffe 23 in vollständiger Überdeckung mit dem zweiten Synchronring 22, d. h. am Ende des Synchronisiervorganges und unmittelbar vor dem formschlüssigen Eingriff mit dem zweiten Kupplungskörper 25. Die Schaltmuffe 23 wird beim Verschieben und Synchronisieren mit erhöhter Schaltkraft S1 beaufschlagt.

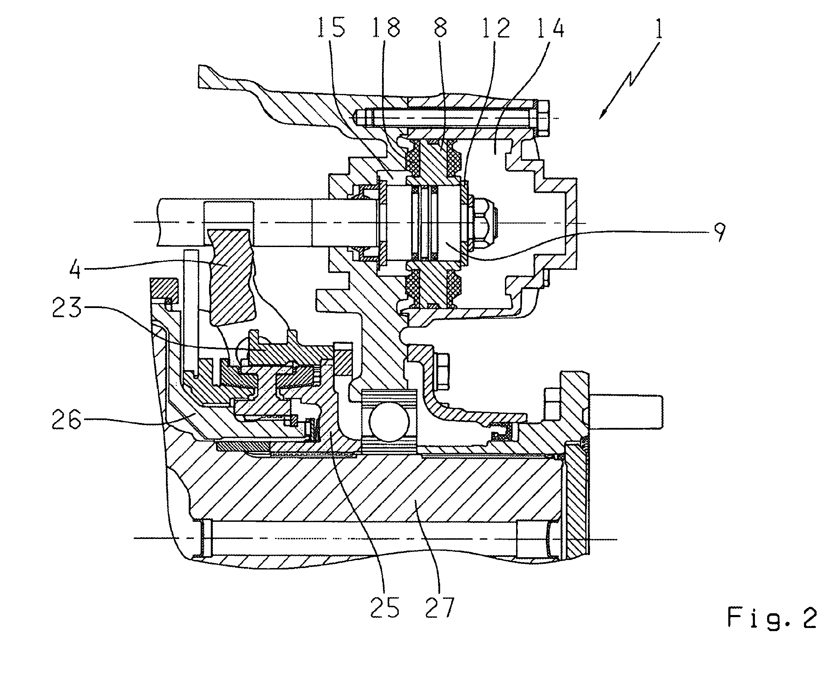

Fig. 2 zeigt die Schalteinrichtung 1 in einer zweiten Position, wobei gleiche Bezugszahlen wie in Fig. 1 verwendet werden. Im Unterschied zu Fig. 1 hat sich der innere Kolben 9 um den Hub s in der Zeichnung nach links bewegt, wodurch die Schaltmuffe 23 durch die Schaltschwinge 4 in der Zeichnung nach rechts bewegt wurde. Die Schaltmuffe 23 ist jetzt über den zweiten Kupplungskörper 25 geschoben und befindet sich in formschlüssigem Eingriff mit der Kupplungsverzahnung (keine Bezugszahl) des Kupplungskörpers 25. Mit dieser Schaltstellung gemäß Fig. 2 besteht eine direkte formschlüssige Verbindung zwischen der Hohlwelle 26 und der Welle 27. Das Überschieben der Schaltmuffe 23 über den Kupplungskörper 25 (zweite Phase) erfolgt mit einer geringeren Schaltkraft, da die Schaltbewegung über den inneren Kolben 9, der eine geringere Kolbenfläche als der Ringkolben 8 aufweist, bei gleichem Druck im Raum 14 bewirkt wird.

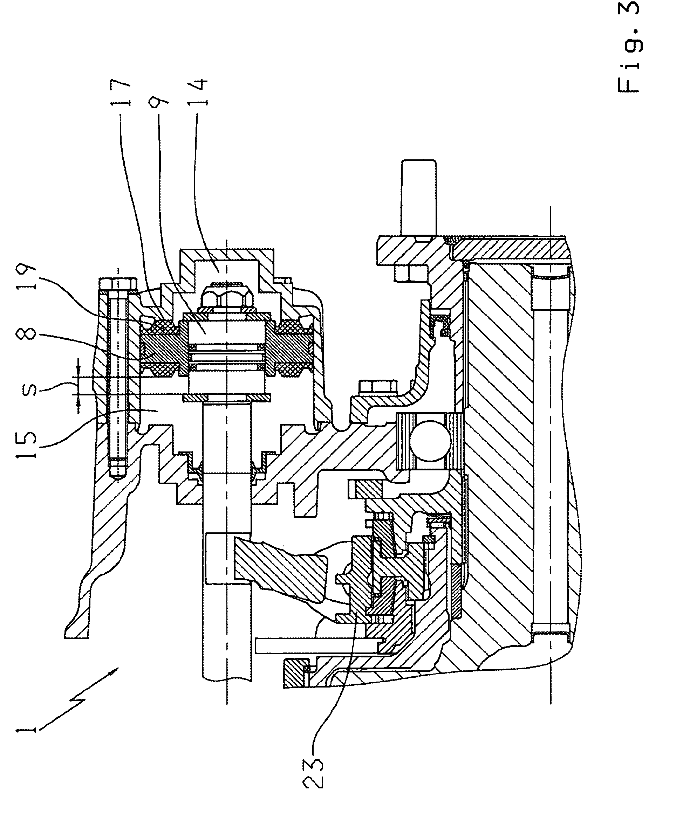

Fig. 3 zeigt die Schalteinrichtung 1 in einer dritten Position, d. h. der Ringkolben 8 befindet sich in seiner in der Zeichnung rechts gelegenen Endlagenposition, d. h. die Dämpfungsauflage 19 liegt an der Anschlagfläche 17 an. Der Raum 15 ist mit Druckluft beaufschlagt, während der Raum 14 entlüftet ist. Der innere Kolben 9 ragt um den Hub s in den Raum 15 hinein. Während sich der Ringkolben 8 in der Zeichnung nach rechts in seine Endlagenposition bewegt hat, ist die Schaltmuffe 23 nach links bewegt worden und befindet sich am Ende der Synchronisierphase (erste Phase), d. h. im Zeitpunkt des Entsperrens.

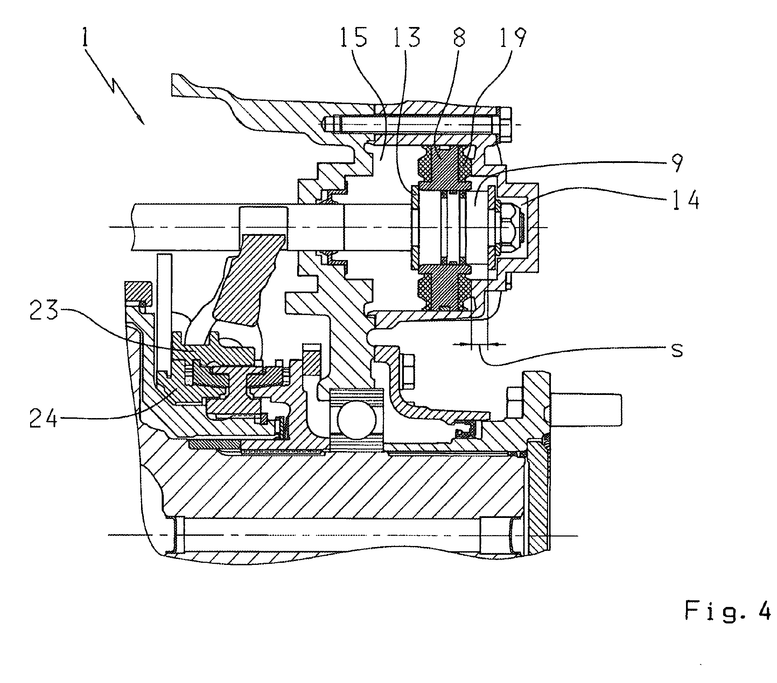

Fig. 4 zeigt die Schalteinrichtung 1 in einer vierten Position, wobei sich der Ringkolben 8 - wie in Fig. 3 - in seiner Endlage befindet, der innere Kolben 9 jedoch um den Hub s in den entlüfteten Raum 14 hineinragt. Demzufolge wurde die Schaltmuffe 23 in der Zeichnung weiter nach links verschoben, sodass sie sich in formschlüssigem Eingriff mit dem ersten Kupplungskörper 24 befindet. Das Überschieben der Schaltmuffe 23 über die Kupplungsverzahnung (ohne Bezugszahl) des ersten Kupplungskörpers 24 erfolgt mit niedriger Schaltkraft. Der Anschlag des inneren Kolbens 9 in seiner dargestellten Endlage erfolgt über die Anschlagscheibe 13 am Ringkolben 8, welche den Anschlag des inneren Kolbens 9 über die Dämpfungsauflage 19 abfedert und dämpft.

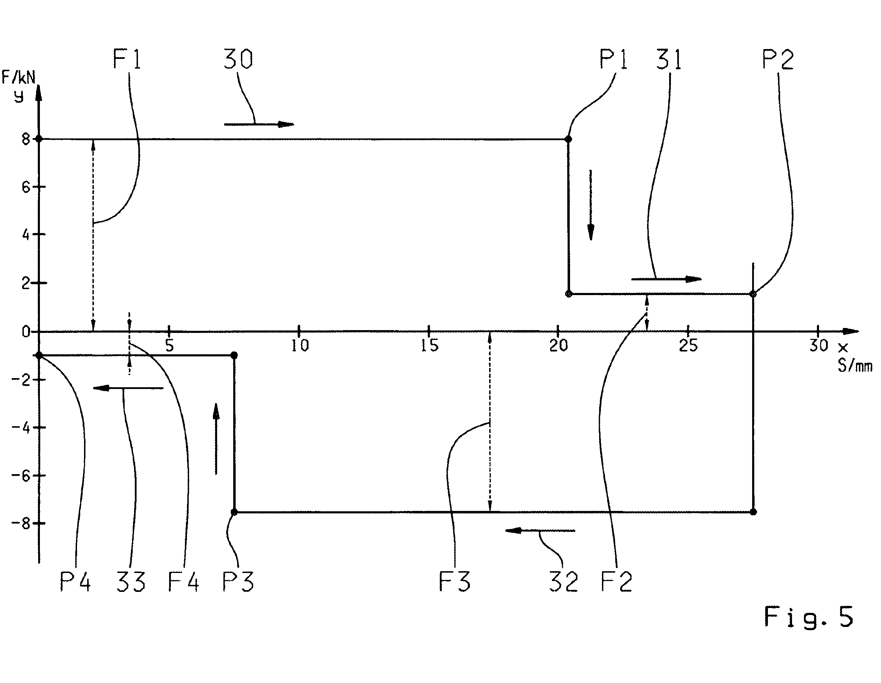

Fig. 5 zeigt ein Diagramm, in welchem der Verlauf der Schaltkraft F über dem Weg S der Schiebemuffe, auch Schaltmuffe genannt, aufgetragen ist. Auf der y-Achse des Diagramms sind Krafteinheiten und auf der x-Achse Längeneinheiten aufgetragen. Die obere Hälfte des Diagramms zeigt den Verlauf der Schaltkraft F während der Schaltung des nachgeschalteten Gruppengetriebes in eine erste Übersetzung. Die Bewegungsrichtung verläuft gemäß einem Pfeil 30 bei zunächst konstanter Schaltkraft F1 bei einem beispielhaften Wert von 8 kN bis zum Punkt P1, fällt dann sprungartig auf einen niedrigeren Wert F2 von etwa 1,6 kN ab und behält diesen Wert gemäß einem Pfeil 31 konstant bis zum Ende des Schaltvorganges am Punkt P2 bei. Der Weg von 0 bis hier beispielhaft etwa 20 auf der x-Achse entspricht dem Synchronisiervorgang, bei welchem eine erhöhte Schaltkraft erforderlich ist. Das Ende des Synchronisiervorganges (Phase 1) ist beim Punkt P1 erreicht, welcher der Darstellung gemäß Fig. 1 entspricht. Der Ringkolben 8 befindet sich also in einer seiner beiden Endlagen. Der weitere Weg der Schaltmuffe 23 nach dem Synchronisiervorgang, d. h. das Überschieben der Schaltmuffe über den Kupplungskörper, erfolgt mit der geringeren Schaltkraft F2 bis zum Punkt P2, welcher der Darstellung in Fig. 2 entspricht. Die geringere Schaltkraft F2 wird also durch die Bewegung des inneren Kolbens 9 bewirkt.

Der untere Teil des Diagramms (negative y-Werte) zeigt den Schaltkraftverlauf bei einer Schaltung des nachgeschalteten Gruppengetriebes in eine entgegengesetzte zweite Übersetzung. Die Bewegungsrichtung verläuft entsprechend den Pfeilen 32, 33 in umgekehrter Richtung ebenfalls bei zunächst konstanter Schaltkraft F3 bei einem beispielhaften Wert von etwa -7,5 kN bis zum Punkt P3. Im Punkt P3, welcher der Darstellung in Fig. 3 entspricht, befindet sich der Ringkolben 8 in der Endlage, der Synchronisiervorgang ist abgeschlossen. Es folgt das Überschieben der Schaltmuffe über den Kupplungskörper bei verringerter Schaltkraft F4 bis zum Punkt P4, welcher der Darstellung gemäß Fig. 4 entspricht. Die geringere Schaltkraft F4 wird durch den Hub des inneren Kolbens 9 bewirkt. Die unterschiedlichen Schaltkräfte F1 bzw. F3 und F2 bzw. F4 in den beiden Schaltrichtungen werden durch die Kolbenstange 10 hervorgerufen, die auf einer Seite die wirksame Druckfläche am Ringkolben 8 und innerem Kolben 9 reduziert.

### Bezugszeichen

- 1: Schalteinrichtung
- 2: Stellmotor
- 3: Schaltstange
- 4: Schaltschwinge
- 5: Synchronisiereinrichtung
- 6: Druckzylinder
- 7: Getriebegehäuse
- 8: Ringkolben (äußerer Kolben)
- 9: innerer Kolben
- 10: Kolbenstange
- 11: O-Ring
- 12: Anschlagscheibe
- 13: Anschlagscheibe
- 14, 15: variabler Raum
- 16, 17: Anschlagfläche für Ringkolben
- 18, 19: Dämpfungsauflage
- 20: Synchronkörper
- 21: erster Synchronring
- 22: zweiter Synchronring
- 23: Schaltmuffe (Schiebemuffe)
- 24: erster Kupplungskörper
- 25: zweiter Kupplungskörper
- 26: Hohlwelle
- 27: Welle
- 30,31,32,33: Pfeil
- s: Kolbenhub
- F, F1, F2, F3, F4: Schaltkraft
- S: Weg

## Patentansprüche

1. Stellmotor zur Durchführung eines synchronisierten Schaltvorganges, umfassend einen Druckzylinder (6) und einen mit einer Kolbenstange (10) verbundenen Kolben, der von einem Druckmedium zur Erzielung einer Stellbewegung beaufschlagbar ist, wobei der Schaltvorgang eine erste Phase des Synchronisierens und Sperrens sowie eine zweite Phase des Durchschaltens umfasst, wobei über eine Schaltstange (3) eine Schaltkraft (F) auf eine Schaltmuffe (23) einer Synchronisiereinrichtung (5) aufgebracht wird, wobei ferner der Kolben geteilt ist und einen ringförmigen äußeren Kolben (8) sowie einen mit der Kolbenstange (10) verbundenen inneren Kolben (9) aufweist, der äußere Kolben (8) und der innere Kolben (9) in Richtung der Stellbewegung relativ zueinander verschiebbar sind und dabei der innere Kolben (9) axiale Anschlagelemente (12, 13) aufweist, welche die Relativbewegung zwischen dem äußeren und dem inneren Kolben (8, 9) begrenzen, der Druckzylinder (6) für den äußeren Kolben (8) stirnseitige, sich gegenüberliegende Anschlagflächen (16, 17) aufweist, und der äußere Kolben (8) einen größeren Außendurchmesser und eine größere wirksame Kolbenfläche als der innere Kolben (9) aufweist, wodurch durch den äußeren Kolben (8) eine größere Stellkraft über die Kolbenstange (10) übertragen wird als durch den inneren Kolben (9), so dass in der ersten Phase des Synchronisierens und Sperrens an der Schaltmuffe (23) eine größere Schaltkraft als in der zweiten Phase des Durchschaltens auftritt.

2. Stellmotor nach Anspruch 1, **dadurch gekennzeichnet, dass** der innere und der äußere Kolben (8, 9) einen Gleitsitz bilden und im Bereich des Gleitsitzes durch Dichtelemente (11) abgedichtet sind.

3. Stellmotor nach einem der Ansprüche 1 oder 2, **dadurch gekennzeichnet, dass** die Anschlagflächen (16, 17) für den äußeren Kolben (8) ringförmig ausgebildet sind.

4. Stellmotor nach einem der Ansprüche 1 bis 3, **dadurch gekennzeichnet, dass** als Druckmedium Luft verwendet wird.

5. Stellmotor nach Anspruch 4, **dadurch gekennzeichnet, dass** zwischen dem äußeren Kolben (8) und den Anschlagflächen (16, 17) Dämpfungselemente, insbesondere am äußeren Kolben (8) befestigte Dämpfungsauflagen (17, 18) vorgesehen sind.

## Claims

1. Actuator for carrying out a synchronized shift operation, comprising a pressure cylinder (6) and a piston connected to a piston rod (10), which piston can be acted upon by a pressurizing medium in order to achieve an actuating movement, wherein the shift operation comprises a first phase of synchronization and locking and a second phase of through-shifting, wherein a shifting force (F) is applied via a shift rod (3) onto a shift sleeve (23) of a synchronization device (5), wherein furthermore the piston is divided and has an annular outer piston (8) as well as an inner piston (9) connected to the piston rod (10), the outer piston (8) and the inner piston (9) can be displaced relative to one another in the direction of the actuating movement and in this case the inner piston (9) has axial stop elements (12, 13) which restrict the relative movement between the outer and the inner piston (8, 9), the pressure cylinder (6) has opposing stopping surfaces (16, 17) at the face side for the outer piston (8), and the outer piston (8) has a larger outer diameter and a larger active piston surface than the inner piston (9), as a result of which a larger actuating force is transmitted by the outer piston (8) via the piston rod (10) than by the inner piston (9) such that a larger shifting force occurs in the first phase of the synchronization and locking at the shift sleeve (23) than in the second phase of the through-shifting.

2. Actuator according to Claim 1, **characterized in that** the inner and the outer piston (8, 9) form a sliding seat and are sealed off in the region of the sliding seat by sealing elements (11).

3. Actuator according to either of Claims 1 and 2, **characterized in that** the stopping surfaces (16, 17) for the outer piston (8) are formed annularly.

4. Actuator according to one of Claims 1 to 3, **characterized in that** air is used as the pressurizing medium.

5. Actuator according to Claim 4, **characterized in that** damping elements, in particular damping layers (17, 18) fastened to the outer piston (8) are provided between the outer piston (8) and the stopping surfaces (16, 17).

## Revendications

1. Servomoteur pour effectuer une opération de changement de vitesses synchronisée, comprenant un cylindre de pression (6) et un piston connecté à une tige de piston (10), qui peut être sollicité par un fluide sous pression pour obtenir un mouvement de réglage, l'opération de changement de vitesses comprenant une première phase de synchronisation et de blocage ainsi qu'une deuxième phase de commutation, une force de changement de vitesses (F) étant appliquée par le biais d'une tige de changement de vitesses (3) sur un manchon de changement de vitesses (23) d'un dispositif de synchronisation (5), le piston étant en outre divisé et présentant un piston extérieur annulaire (8) ainsi qu'un piston intérieur (9) connecté à la tige de piston (10), le piston extérieur (8) et le piston intérieur (9) pouvant être déplacés l'un par rapport à l'autre dans la direction du mouvement de réglage, et le piston intérieur (9) présentant en l'occurrence des éléments de butée axiaux (12, 13) qui limitent le mouvement relatif entre le piston extérieur et le piston intérieur (8, 9), le cylindre de pression (6) pour le piston extérieur (8) présentant des surfaces de butée (16, 17) du côté frontal, opposées l'une à l'autre, et le piston extérieur (8) présentant un plus grand diamètre extérieur et une plus grande surface de piston active que le piston intérieur (9), de sorte que le piston extérieur (8) puisse transmettre une plus grande force de réglage par le biais de la tige de piston (10) que le piston intérieur (9), de sorte que dans la première phase de synchronisation et de blocage, une plus grande force de changement de vitesses se produise au niveau du manchon de changement de vitesses (23) que dans la deuxième phase de commutation.

2. Servomoteur selon la revendication 1, **caractérisé en ce que** le piston intérieur et le piston extérieur (8, 9) forment un ajustement glissant et sont étanchés dans la région de l'ajustement glissant par des éléments d'étanchéité (11).

3. Servomoteur selon l'une quelconque des revendications 1 ou 2, **caractérisé en ce que** les surfaces de butée (16, 17) pour le piston extérieur (8) sont réalisés sous forme annulaire.

4. Servomoteur selon l'une quelconque des revendications 1 à 3, **caractérisé en ce que** l'on utilise de l'air comme fluide sous pression.

5. Servomoteur selon la revendication 4, **caractérisé en ce qu'**entre le piston extérieur (8) et les surfaces de butée (16, 17) sont prévus des éléments d'amortissement, notamment des appuis d'amortissement (17, 18) fixés sur le piston extérieur (8).
